# FASCICULE DE BREVET EUROPEEN

(11) **EP 0 744 038 B1**
(45) Date de publication et mention de la délivrance du brevet: **03.07.2002**
(21) Numéro de dépôt: 95929921.5
(22) Date de dépôt: 01.09.1995
(51) Int. Cl.: G02C 3/00

(54) **ANNEAU DE FIXATION DES CORDONS ET DES CHAINETTES DE LUNETTES**
BEFESTIGUNGSRING FÜR BRILLENSCHNURE UND KETTE
RING FOR SECURING CORDS AND CHAINS TO SPECTACLE SIDE PIECES

(30) Priorité: 01.09.1994 FR 9410534
(43) Date de publication de la demande: 27.11.1996
(73) Titulaire: Deveney, Jean-Paul, 45300 Echilleuse (FR)
(72) Inventeur: Deveney, Jean-Paul, 45300 Echilleuse (FR)
(74) Mandataire: Pernez, Helga
(86) Numéro de dépôt international: FR9501141
(87) Numéro de publication internationale: WO9607121

(56) Documents cités:
- WO-A-93/18430
- FR-A- 2 678 078
- GB-A- 2 153 103
- US-A- 4 471 509
- US-A- 4 922 581
- US-A- 4 965 913
- US-A- 5 015 085
- US-A- 5 092 668

## Description

La présente invention concerne les anneaux de fixation des cordons et des chaînettes, aux branches des lunettes.

Les anneaux existants de fixation des cordons et chaînettes aux. branches de lunettes se composent soit d'un anneau plat en PVC généralement obtenu par des coupes perpendiculaires et parallèles à partir d'un tuyau souple en PVC, soit par un anneau rond en caoutchouc synthétique - (Néoprène ou nitril) ; obtenu par moulage ou injection et destiné à servir de joint dans l'industrie hydraulique. Ces anneaux ont le double inconvénient de n'avoir que peu d'adhésion aux branches de lunettes et de ne remplir que partiellement la bague de serrage, qui de ce fait n'assure pas le blocage du serrage, la bague glisse, l'anneau se desserre et laisse échapper la branche.

Il existe également un système qui utilise deux anneaux ronds au lieu d'un, toutefois les surfaces des anneaux au contact des branches et de l'intérieur de la bague sont nettement inférieures à celles de l'invention faisant l'objet de ce brevet.

On connaît par ailleurs dans l'état de la technique le brevet W093/18430 décrit un anneau en élastique en néoprène pour la fixation de chaînettes traversant une bague élastique.

Le brevet GB2153103 décrit un autre exemple de fixation de chaînette.

En effet en utilisant deux joints de section ronde, passant à l'intérieur d'une même bague de serrage, l'adhésion à la branche après serrage de la bague reste limitée aux parties légèrement aplaties sur la branche, et les surfaces de contact, donc d'adhésion, sont inférieures de plus de la moitié à celles de la nouvelle invention, que ce soit au niveau de l'adhésion à la branche ou tout anneau rond lui est inférieur, ou qu'il s'agisse de l'adhésion à la bague, ou tout anneau plat glisse facilement par le jeu que son volume laisse inoccupé.

La nouvelle invention, supprime tous ces inconvénients, elle comporte un anneau en caoutchouc naturel ou synthétique, de préférence en néoprène spécialement conçu et réalisé pour la fonction d'attache cordon aux lunettes.

La coupe de cet anneau est demi-sphérique, la base de sa section qui a le diamètre du demi cercle qu'elle forme est plate et vient entièrement au contact avec la branche, et les deux parties de l'anneau en se rejoignant à l'intérieur de la bague forment un cercle parfait qui emplit toute la bague, et supprime ainsi tout jeu favorisant le glissement de l'anneau dans la bague.

Dans la nouvelle invention, les deux parties de l'anneau en se rejoignant lors de leur passage à l'intérieur de la bague présentent une section dont le diamètre est supérieur à celui de la bague, d'où nécessité d'étirer les anneaux pour les passer.

L'étirage de l'anneau relâche la bague et s'incruste dans les deux parties de l'anneau, en formant sur elles par sa compression, un bourrelet au pourtour de chaque extrémité de la bague, ces bourrelets en empêchant tout glissement de la bague permettent et assurent le serrage constant et maximal de l'anneau sur les branches de lunettes.

L'aspect extérieur de l'anneau peut également comporter des rainures, ou tout autre aspérité accentuant le blocage de la bague au serrage.

Dans une réalisation préférentielle non limitative, l'arc de cercle de l'anneau est légèrement modifié pour en affiner l'esthétique sur les branches de lunettes, l'arc de cercle est légèrement conique. Cet allégement de matière est largement compensé par l'effet de compression, donc il ne modifie en rien le remplissage de la bague.

L'invention sera mieux comprise à la lecture de la description qui suit, concernant un exemple de réalisation non limitatif, faisant référence aux dessins annexés où :
- la figure 1 représente une vue en coupe de la section de l'anneau selon l'invention ;
- la figure 2 représente une vue en coupe préférentielle de la section de l'anneau selon l'invention ;
- la figure 3 représente une vue en coupe de la section de l'anneau selon l'invention ;
- la figure 4 représente représente l'anneau positionné sur la branche de lunette ;

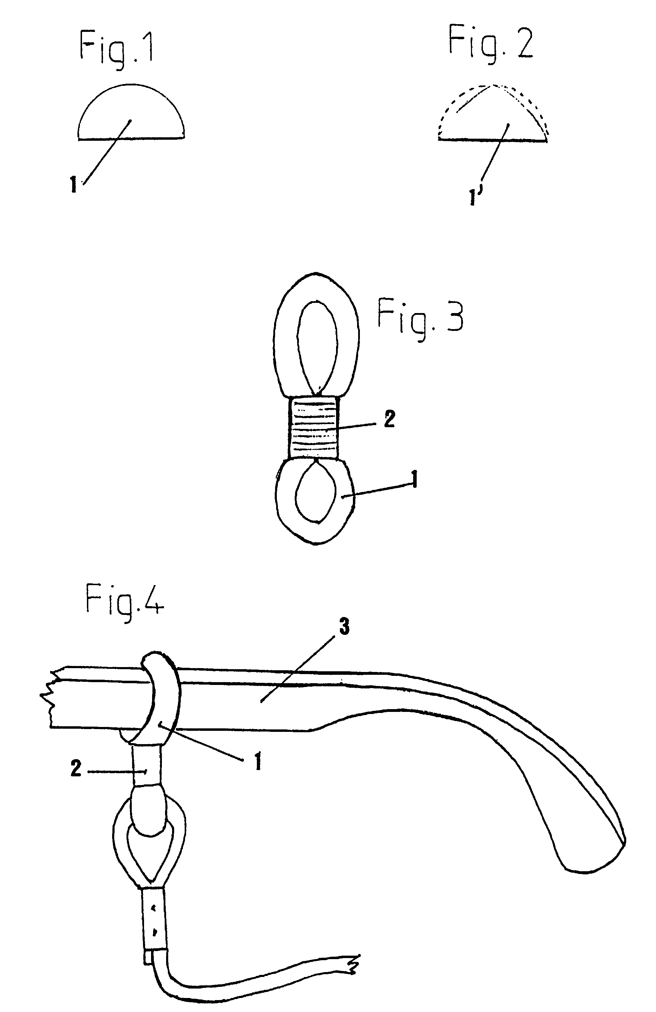

La figure 1, représente en coupe (échelle x12), la section de l'anneau en forme de demi-cercle, faisant l'objet de l'invention dans sa conception originale, et dans une version préférentielle figure 2, la section conique (1'), puis toujours en coupe en figure 3 (échelle x6) l'ensemble, de la bague (2) positionnée sur l'un des anneaux (1) ou (1').

La figure 4 (échelle x3) représente l'anneau (1) positionné sur une branche de lunettes (3). L'invention est plus particulièrement destinée à l'industrie de la lunetterie.

## Revendications

1. Anneau élastique, de préférence en néoprène pour la fixation des cordons et chaînettes aux branches des lunettes, **caractérisé en ce qu'**il comporte une section demi-circulaire (1) à la base plate qui vient au contact de la branche (3) des lunettes, et traversé une bague cylindrique (2) de serrage d'un diamètre inférieur à la section du cercle formé par les deux parties de l'anneau, en se rejoignant à l'intérieur de la bague (2).

2. Anneau élastique, de préférence en néoprène pour la fixation des cordons et chaînettes aux branches des lunettes selon la revendication 1, **caractérisé en ce que** l'anneau élastique comporte une section conique à base plate.

3. Anneau élastique, de préférence en néoprène pour la fixation des cordons et chaînettes aux branches des lunettes selon la revendication 1, **caractérisé en ce que** l'anneau peut comporter sur son pourtour extérieur, des rainures ou d'autres aspérités.

## Patentansprüche

1. Elastischer Ring, bevorzugt aus Neopren, zur Befestigung von Schnüren und Kettchen an Brillenbügeln, **dadurch gekennzeichnet, dass** er einen halbkreisförmigen, unten flachen Querschnitt (1) umfasst, der mit dem Bügel (3) der Brille in Kontakt kommt, und durch einen zylindrischen Klemmring (2) geht, der einen Durchmesser aufweist, der kleiner ist als der Querschnitt des Kreises, der aus den beiden Teilen des Rings gebildet wird, indem sie im Innern des Ringes (2) zusammenkommen.

2. Elastischer Ring, bevorzugt aus Neopren, zur Befestigung von Schnüren und Kettchen an Brillenbügeln gemäß Anspruch 1, **dadurch gekennzeichnet, dass** der elastische Ring einen kegelförmigen Querschnitt mit flacher Basis umfasst.

3. Elastischer Ring, bevorzugt aus Neopren, zur Befestigung von Schnüren und Kettchen an Brillenbügeln gemäß Anspruch 1, **dadurch gekennzeichnet, dass** der Ring auf seinem äußeren Umfang Rillen oder andere Unebenheiten umfasst.

## Claims

1. Elastic loop, preferably in neoprene for the fixation of cords and chains to the branches of spectacles, **characterised in that** it comprises a semicircular cross-section (1) with a flat base which comes into contact with the branch (3) of the spectacles and crosses a cylindrical blocking ring (2) of a diameter less than the cross section of the circle formed by the two parts of the loop, joining together inside the ring (2).

2. Elastic loop, preferably in neoprene for the fixation of cords and chains to the branches of spectacles according to claim 1, **characterised in that** the elastic loop comprises a conical section with a flat base.

3. Elastic loop, preferably in neoprene for the fixation of cords and chains to the branches of spectacles according to claim 1, **characterised in that** the ring can comprise on its outer boundary, grooves or other roughness.
